# EUROPEAN PATENT APPLICATION

(11) **EP 4 819 215 A1**
(43) Date of publication of application: **07.10.2026**
(21) Application number: 24897468.5
(22) Date of filing: 22.11.2024
(51) Int. Cl.: H01M 4/13, H01M 4/62, H01M 4/139

(54) **POSITIVE ELECTRODE FOR LITHIUM ION SECONDARY BATTERIES, LITHIUM ION SECONDARY BATTERY, AND POSITIVE ELECTRODE ACTIVE MATERIAL SLURRY**

(30) Priority: 01.12.2023 JP 2023204106
(71) Applicant: Eliiy Power Co., Ltd., Tokyo 141-0032 (JP)
(72) Inventor: HARA, Tomitaro, Tokyo 141-0032 (JP); SAWANISHI, Keisuke, Tokyo 141-0032 (JP); ITO, Daichi, Tokyo 141-0032 (JP)
(74) Representative: Savi, Massimiliano
(86) International application number: PCT/JP2024/041483
(87) International publication number: WO 2025/115782

(57) **Abstract**

The present invention provides a positive electrode for a lithium ion secondary battery, which can have a large and uniform thickness. The positive electrode for a lithium ion secondary battery of the present invention includes a current collector and a positive electrode active material layer provided on the current collector, in which the positive electrode active material layer contains positive electrode active material particles, a latex-derived polymer binder, sodium carboxymethyl cellulose or calcium carboxymethyl cellulose, and a mannose-based water-soluble polymer.

## Description

### TECHNICAL FIELD

The present invention relates to a positive electrode for a lithium ion secondary battery, a lithium ion secondary battery, and a positive electrode active material slurry.

### BACKGROUND ART

A positive electrode active material layer of a lithium ion battery is usually fabricated by applying a slurry containing positive electrode active material particles, a PVdF binder, N-methylpyrrolidone, and a conductive agent onto a current collector, and drying the applied layer. However, N-methylpyrrolidone is included in the list of substances restricted under REACH due to its toxicity concerns.

As a method of fabricating a positive electrode active material layer without using N-methylpyrrolidone, a method is known in which a slurry containing positive electrode active material particles, an aqueous binder, a conductive agent, and water is applied onto a current collector, and the applied layer is dried (for example, see Patent Document 1).

### PRIOR ART DOCUMENT

### PATENT DOCUMENT

Patent Document 1: Japanese Patent Laid-Open Publication No. 2017-091789

### SUMMARY OF THE INVENTION

### PROBLEMS TO BE SOLVED BY THE INVENTION

However, since the conventional positive electrode active material slurry using water as a dispersion medium has a low viscosity, when a thick applied layer is intended to be formed, the positive electrode active material slurry flows in the applied layer, and an applied layer and a positive electrode active material layer having a large and uniform thickness cannot be formed. In addition, cracking may occur in the positive electrode active material layer.

The present invention has been made in view of such circumstances, and provides a positive electrode for a lithium ion secondary battery in which a positive electrode active material layer can have a large and uniform thickness.

### SOLUTIONS TO THE PROBLEMS

The present invention provides a positive electrode for a lithium ion secondary battery, including a current collector and a positive electrode active material layer provided on the current collector, wherein the positive electrode active material layer contains positive electrode active material particles, a latex-derived polymer binder, sodium carboxymethyl cellulose or calcium carboxymethyl cellulose, and a mannose-based water-soluble polymer.

The present invention also provides a lithium ion secondary battery including the positive electrode of the present invention, a negative electrode, a separator, and a non-aqueous electrolyte.

The present invention also provides a positive electrode active material slurry containing positive electrode active material particles, a latex-derived polymer binder, sodium carboxymethyl cellulose or calcium carboxymethyl cellulose, a mannose-based water-soluble polymer, and water.

### EFFECTS OF THE INVENTION

Since the mannose-based water-soluble polymer exhibits a high thickening effect even in a small amount, the positive electrode active material slurry of the present invention has high coating stability. Since the positive electrode active material layer of the positive electrode for a lithium ion secondary battery of the present invention can be formed using the positive electrode active material slurry of the present invention, it can have a thick and uniform thickness. Further, the occurrence of cracking in the positive electrode active material layer can be suppressed. As a result, the lithium ion secondary battery of the present invention can have a large battery capacity and high life characteristics. Since the positive electrode active material layer contains only a small amount of the mannose-based water-soluble polymer, the internal resistance can be reduced, and the lithium ion secondary battery of the present invention has excellent output characteristics.

### BRIEF DESCRIPTION OF THE DRAWINGS

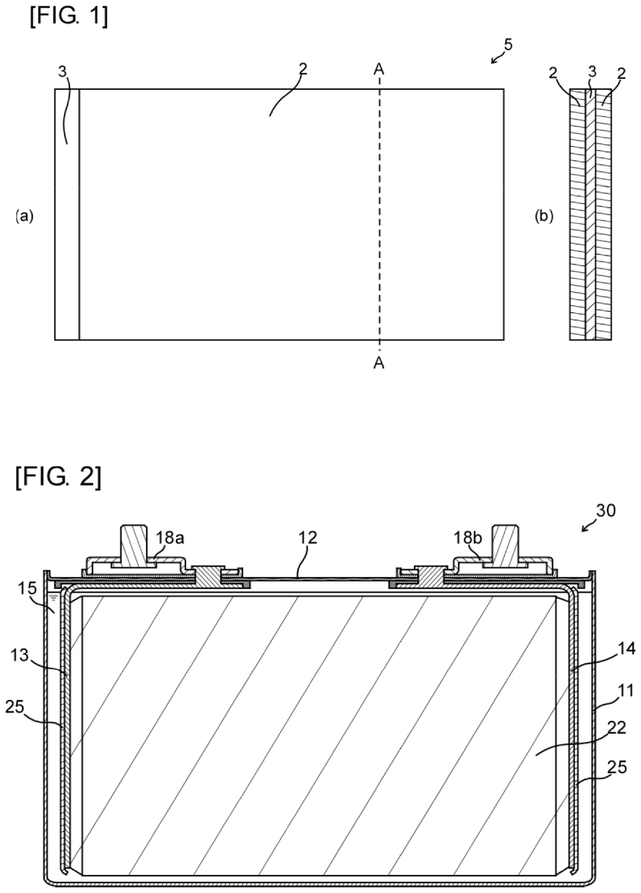

FIG. 1(a) is a schematic plan view of a positive electrode for a lithium ion secondary battery of an embodiment of the present invention, and FIG. 1(b) is a schematic cross-sectional view of the positive electrode taken along a dashed line A-A in FIG. 1(a).
FIG. 2 is a schematic cross-sectional view of the lithium ion secondary battery of the embodiment of the present invention.
FIG. 3(a) is a schematic plan view of a negative electrode included in the lithium ion secondary battery of the embodiment of the present invention, and FIG. 3(b) is a schematic cross-sectional view of the negative electrode taken along a dashed line B-B in FIG. 3(a).
FIG. 4 is a schematic structural view of an electrode assembly included in the lithium ion secondary battery of the embodiment of the present invention.
FIG. 5 shows discharge curves of lithium ion secondary batteries of Working Examples 1 and 2.

### EMBODIMENT OF THE INVENTION

An embodiment of the present invention will be described below using the drawings. The configurations shown in the drawings and the following description are examples, and the scope of the present invention is not limited to those shown in the drawings and the following description.

A positive electrode 5 for a lithium ion secondary battery of the present embodiment includes a current collector 3 and a positive electrode active material layer 2 provided on the current collector 3, in which the positive electrode active material layer 2 contains positive electrode active material particles, a latex-derived polymer binder, sodium carboxymethyl cellulose or calcium carboxymethyl cellulose, and a mannose-based water-soluble polymer.

A lithium ion secondary battery 30 of the present embodiment includes the positive electrode 5, a negative electrode 32, a separator 34, and a non-aqueous electrolyte 15.

A positive electrode active material slurry of the present embodiment contains positive electrode active material particles, a latex-derived polymer binder, sodium carboxymethyl cellulose or calcium carboxymethyl cellulose, a mannose-based water-soluble polymer, and water.

The positive electrode 5 for a lithium ion secondary battery is a positive electrode 5 included in the lithium ion secondary battery 30 or is a positive electrode 5 used for producing the lithium ion secondary battery 30.

The positive electrode 5 for a lithium ion secondary battery includes a positive electrode current collector 3 and a porous positive electrode active material layer 2 provided on the positive electrode current collector 3.

The positive electrode current collector 3 is a sheet serving as a substrate on which the positive electrode active material layer 2 is provided, and is a conductor electrically connecting a positive electrode connection member 13 and the positive electrode active material layer 2 to each other. The positive electrode current collector 3 is, for example, an aluminum foil. The positive electrode connection member 13 is electrically connected to an external connection terminal 18a. The positive electrode active material layer 2 may be provided on one side of the positive electrode current collector 3 or may be provided on both sides of the positive electrode current collector 3.

The positive electrode active material layer 2 is a layer containing a positive electrode active material. The thickness (after pressing) of the positive electrode active material layer 2 may be 150 µm or more and 400 µm or less. As a result, the amount of the positive electrode active material contained in the positive electrode 5 increases, and the battery capacity of the lithium ion secondary battery 30 can be increased.

The positive electrode active material layer 2 contains positive electrode active material particles, a latex-derived polymer binder, CMC (sodium carboxymethyl cellulose or calcium carboxymethyl cellulose), and a mannose-based water-soluble polymer. The positive electrode active material layer 2 may contain a conductive agent. Furthermore, the positive electrode active material layer 2 may contain a surfactant.

The positive electrode active material contained in the positive electrode active material layer 2 is a substance directly involved in electron transfer associated with electric charge transfer on the positive electrode 5. The positive electrode active material is, for example, LiCoO₂, LiNiO₂, LiNiₓCo₁₋ₓO₂ (x = 0.01 to 0.99), LiMnO₂, LiMn₂O₄, LiCoₓMn_{y}Ni_{z}O₂ (x + y + z = 1), or olivine-type LiFePO₄ or LiₓFe_{1-y}M_{y}PO₄, where 0.05 ≦ x ≦ 1.2, 0 ≦ y ≦ 0.8, and M is at least one or more kinds of Mn, Cr, Co, Cu, Ni, V, Mo, Ti, Zn, Al, Ga, Mg, B, and Nb. The positive electrode active material layer 2 may contain one kind of these positive electrode active materials alone or a mixture of plural kinds thereof. The particles of the positive electrode active material (for example, particles of lithium iron phosphate (LiFePO₄)) may have a conductive film on the surface thereof. This can improve the conductivity of the surface of the positive electrode active material on which an intercalation reaction is progressing, and can reduce the internal resistance of the positive electrode 5. The conductive film is, for example, a carbon film. The positive electrode active material particles may be contained in the positive electrode active material layer 2 as secondary particles in which primary particles are aggregated. The average particle diameter of the primary particles of the positive electrode active material can be 30 nm or more and 400 nm or less. The average particle diameter can be calculated by measuring the particle diameters of 100 randomly selected particles in a cross-sectional photograph of the positive electrode active material layer 2 and arithmetically averaging these particle diameters.

The positive electrode active material layer 2 can contain first lithium iron phosphate secondary particles and second lithium iron phosphate secondary particles having a smaller particle diameter than that of the first lithium iron phosphate secondary particles.

The first lithium iron phosphate secondary particles are lithium iron phosphate secondary particles having a particle diameter of 10 µm or more among a plurality of lithium iron phosphate secondary particles contained in the positive electrode active material layer 2, and have an average particle diameter of 15 µm or more and 22 µm or less.

The second lithium iron phosphate secondary particles are lithium iron phosphate secondary particles having a particle diameter of less than 10 µm among a plurality of lithium iron phosphate secondary particles contained in the positive electrode active material layer 2, and have an average particle diameter of 2 µm or more and 7 µm or less.

For example, the average particle diameter of the first lithium iron phosphate can be obtained by measuring the particle diameters of 100 randomly selected lithium iron phosphate secondary particles in a cross-sectional photograph of the positive electrode active material layer 2, and arithmetically averaging the particle diameters of secondary particles having a particle diameter of 10 µm or more among the secondary particles whose particle diameters have been measured, and the average particle diameter of the second lithium iron phosphate can be obtained by arithmetically averaging the particle diameters of secondary particles having a particle diameter of less than 10 µm among the secondary particles whose particle diameters have been measured.

A ratio (b/a) of the mass (b) of the second lithium iron phosphate secondary particles to the mass (a) of the first lithium iron phosphate secondary particles is, for example, (1/9) or more and (3/7) or less (b : a = 1 : 9 to 3 : 7). The mass of the lithium iron phosphate secondary particles can be calculated from the density and the particle diameter of the lithium iron phosphate secondary particles. The density of the lithium iron phosphate secondary particles can be measured and calculated using lithium iron phosphate secondary particles (powder) equivalent to the lithium iron phosphate secondary particles contained in the positive electrode active material layer 2.

Examples of the conductive agent include fine particles of furnace black, acetylene black, carbon black, and coke-based soft carbon. Since the positive electrode active material layer 2 contains a conductive agent, the conductivity of the positive electrode active material layer 2 can be improved, thereby reducing the internal resistance of the positive electrode 5.

The latex-derived polymer binder is a polymer binder (water-based polymer binder) capable of being colloidally dispersed in a water dispersion medium. The polymer binder is, for example, an acrylic polymer binder or styrene butadiene rubber (SBR). By using such a polymer binder, it is possible to use water or an aqueous solution as a dispersion medium of the positive electrode active material slurry used for forming the positive electrode active material layer 2. The glass transition point Tg of the polymer compound serving as the polymer binder is, for example, 20°C or less, preferably 10°C or less, and more preferably 0°C or less. This enables the polymer binder to have flexibility.

Because the positive electrode active material layer 2 contains a polymer binder, it is possible to suppress delamination of the positive electrode active material layer 2 from the positive electrode current collector 3 and the formation of cracks in the positive electrode active material layer 2.

A specific gravity of the acrylic rubber contained in the acrylic polymer binder is 1.1, the range of hardness of the acrylic rubber measured according to JIS standards is 40 to 90, the tensile strength of the acrylic rubber is 70 to 120 kg/cm², the elongation of the acrylic rubber is 100 to 600%, and the volume resistance of the acrylic rubber is 10⁸ to 10¹⁰ Ω/cm.

The styrene butadiene rubber (SBR) has a specific gravity of 0.94, the range of hardness of SBR measured according to JIS standards is from 30 to 100, the tensile strength of SBR is from 50 to 200 kg/cm², the elongation of SBR is from 100 to 800%, and the volume resistance of SBR is from 10¹⁰ to 10¹⁵ Ω/cm.

The CMC (sodium carboxymethyl cellulose or calcium carboxymethyl cellulose) has a function of increasing the viscosity of the positive electrode active material slurry used for forming the positive electrode active material layer 2. The CMC may also function as a binder for the positive electrode active material layer 2. Since the positive electrode active material slurry contains CMC, the viscosity of the positive electrode active material slurry can be increased, and the positive electrode active material layer 2 can have a uniform thickness. In addition, the positive electrode active material slurry can be thickly applied, and a thick positive electrode active material layer 2 (having a thickness of, for example, 150 µm or more (after pressing)) can be formed.

The mannose-based water-soluble polymer has a function of increasing the viscosity of the positive electrode active material slurry used for forming the positive electrode active material layer 2. Since the positive electrode active material slurry contains the mannose-based water-soluble polymer, the viscosity of the positive electrode active material slurry can be increased, and the positive electrode active material layer 2 can have a uniform thickness. In addition, the positive electrode active material slurry can be thickly applied, and a thick positive electrode active material layer 2 (having a thickness of, for example, 150 µm or more (after pressing)) can be formed. The mannose-based water-soluble polymer is a polysaccharide containing mannose as a constituent component, and examples thereof include α-mannan, β-mannan, glucomannan (for example, konjac mannan), galactomannan (for example, guar gum, fenugreek gum, tara gum, locust bean gum, cassia gum, etc.), etc.

A ratio (b/a) of the mass (b) of the mannose-based water-soluble polymer contained in the positive electrode active material layer 2 to the mass (a) of the positive electrode active material particles contained in the positive electrode active material layer 2 is, for example, (0.05/98.3) or more and (0.25/98) or less. Thus, the positive electrode active material slurry can have high coating stability, and the positive electrode active material layer 2 can have a large and uniform thickness. As a result, the lithium ion secondary battery 30 can have a large battery capacity and high life characteristics. Since the positive electrode active material layer 2 contains only a small amount of the mannose-based water-soluble polymer, the internal resistance can be reduced, and the lithium ion secondary battery 30 has excellent output characteristics.

A ratio of the total mass ((b + c)/a) of the mass (b) of the mannose-based water-soluble polymer contained in the positive electrode active material layer 2 and the mass (c) of the CMC contained in the positive electrode active material layer 2 to the mass (a) of the positive electrode active material particles contained in the positive electrode active material layer 2 is, for example, (0.45/98.3) or more and (0.85/98) or less. Thus, the positive electrode active material slurry can have high coating stability, and the positive electrode active material layer 2 can have a large and uniform thickness. As a result, the lithium ion secondary battery 30 can have a large battery capacity and high life characteristics. Since the positive electrode active material layer 2 contains only a small amount of the mannose-based water-soluble polymer and CMC, the internal resistance can be reduced, and the lithium ion secondary battery 30 has excellent output characteristics.

For example, a positive electrode active material slurry is prepared by mixing and kneading lithium iron phosphate secondary particles, a latex of a polymer binder (an emulsion in which a polymer compound serving as a binder is colloidally dispersed in water), CMC, a mannose-based water-soluble polymer, and water or an aqueous solution, the slurry is applied onto the positive electrode current collector 3, and the applied layer is dried to form the positive electrode active material layer 2. A small amount of a surfactant may be added to the positive electrode active material slurry. The positive electrode active material layer 2 may be subjected to a press treatment. In the press treatment, for example, a pressure can be applied to the positive electrode active material layer 2 so that the porosity of the positive electrode active material layer 2 falls within a range of 20% to 40%.

The positive electrode active material slurry can have a viscosity of, for example, 4000 mPa·s or more and 15000 mPa·s or less. As a result, the positive electrode active material layer 2 having a large and uniform thickness can be formed. The viscosity of the positive electrode active material slurry may be a viscosity measured using a B-type viscometer under the condition of a rotation speed of 10 rpm.

For example, the positive electrode active material layer 2 can contain 95 wt% or more and 98.5 wt% or less of the lithium iron phosphate particles, 1.0 wt% or more and 1.5 wt% or less of the latex-derived polymer binder, 0.3 wt% or more and 0.7 wt% or less of the CMC, and 0.01 wt% or more and 0.3 wt% or less of the mannose-based water-soluble polymer. The positive electrode active material slurry can be prepared by mixing the respective materials so that the positive electrode active material layer 2 has such a solid content composition. The solid content percentage of the positive electrode active material slurry can be, for example, 55 wt% or more and 67 wt% or less.

The negative electrode 32 is an electrode having a porous negative electrode active material layer 36. The negative electrode active material layer 36 is, for example, a porous layer which is provided on a sheet-like negative electrode current collector 38 and contains a negative electrode active material. The negative electrode current collector 38 is electrically connected to a negative electrode connection member 14. Further, the negative electrode connection member 14 is electrically connected to an external connection terminal 18b. The negative electrode current collector 38 is, for example, a copper foil.

The negative electrode active material is a substance directly involved in electron transfer associated with electric charge transfer on the negative electrode. Examples of the negative electrode active material include graphite, partially graphitized carbon, hard carbon, soft carbon, lithium titanate (LTO), and an Sn alloy. The negative electrode active material layer 36 can contain one kind of these negative electrode active materials alone or a mixture of plural kinds thereof.

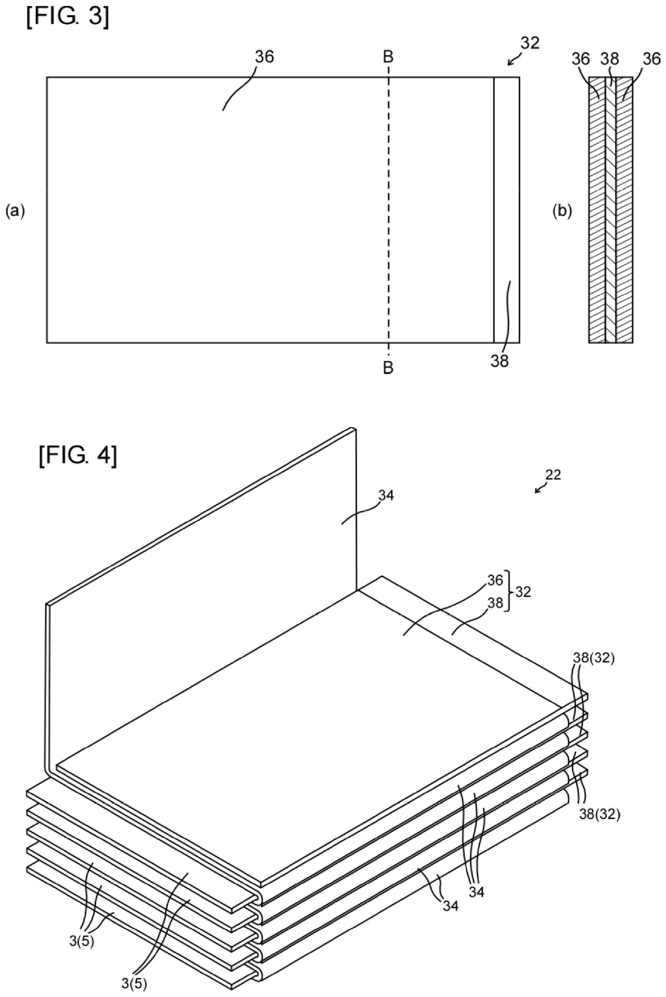

The separator 34 has a sheet shape and is disposed between the positive electrodes 5 and the negative electrodes 32. Further, the separator 34 can configure, together with the positive electrodes 5 and the negative electrodes 32, an electrode assembly 22 as shown in FIG. 4. By providing the separator 34, it is possible to prevent a short-circuit current from flowing between the positive electrodes 5 and the negative electrodes 32.

There is no particular limitation on the separator 34 if the short-circuit current can be prevented from flowing and if ions conducting between the positive electrodes and the negative electrodes can pass through the separator 34, and a microporous film of polyolefin, a cellulose sheet, or an aramid sheet can be used, for example. The separator 34 may be a nonwoven fabric containing at least one of a cellulose fiber, a polyester fiber, a polypropylene fiber, a polyacrylonitrile fiber, and a polyethylene terephthalate fiber.

As shown in FIG. 4, the electrode assembly 22 can have a structure in which a plurality of positive electrodes 5 and a plurality of negative electrodes 32 are laminated so that the positive electrodes 5 and the negative electrodes 32 are alternately disposed. The electrode assembly 22 can have a structure in which the separator 34 is disposed between the positive electrode 5 and the negative electrode 32 adjacent to each other.

For the non-aqueous electrolyte 15, carbonates, lactones, ethers, esters, ionic liquids, or the like may be used as solvents, and two or more kinds of these solvents may be mixed and used. In particular, a cyclic carbonate and a chain carbonate of these solvents are preferably mixed and used. The non-aqueous electrolyte 15 is, for example, a solution in which a solute of a lithium salt such as LiCF₃SO₃, LiAsF₆, LiClO₄, LiBF₄, LiPF₆, LiBOB, LiN(CF₃SO₂)₂, or LiN(C₂F₅SO₂) is dissolved in an organic solvent. Further, if necessary, additives such as VC (vinylene carbonate), PS (propane sultone), VEC (vinyl ethyl carbonate), PRS (propene sultone) and a flame retardant may be blended, either individually or in a mixture of plural kinds thereof.

A battery case 11 is a battery casing that houses the electrode assembly 22 (including the positive electrode 5, the negative electrode 32, and the separator 34) and the non-aqueous electrolyte 15. The battery case 11 may be made in a pouch shape made by welding a laminate film at a welded part. In this case, the lithium ion secondary battery 30 is a pouch battery. Alternatively, the battery case 11 may be a metal case or a hard resin case. The battery case 11 may have a lid member 12.

### Preparation of positive electrode active material slurry

Lithium iron phosphate powder, an acrylic polymer binder liquid (latex dispersed aqueous solution AXA391, active ingredient concentration: 40 wt%, glass transition point Tg: - 35°C, pH: 7 to 9, B-type viscosity: 5 to 50 cP, average particle diameter: 180 µm, particle diameter distribution: peak at 170 µm (100 to 500 µm)), sodium carboxymethyl cellulose (CMC, BSH6 (degree of etherification: 0.65 to 0.75, viscosity of 1% CMC aqueous solution at 25°C: 3000 to 4000 mPa·s) manufactured by Dai-ichi Kogyo Seiyaku Co., Ltd.), konjac mannan, guar gum, xanthan gum, and glucose (starch) shown in the solid content compositions of Working Examples 1 to 3 and Comparative Examples 1 to 4 in Table 1 were mixed so as to obtain the solid content compositions shown in Table 1. The components indicated by horizontal bars in Table 1 were not mixed. Then, water was added to the mixtures and kneaded so as to obtain the solid content percentages shown in Table 1, thereby preparing positive electrode active material slurries of Working Examples 1 to 3 and Comparative Examples 1 to 4.

**[Table 1]**

| | | Working Example 1 | Working Example 2 | Working Example 3 | Comparative Example 1 | Comparative Example 2 | Comparative Example 3 | Comparative Example 4 |
|---|---|---|---|---|---|---|---|---|
| Solid content composition | Lithium iron phosphate | 98.3wt% | 98.3wt% | 98wt% | 98wt% | 98wt% | 98.3wt% | 98.3wt% |
| | Acrylic binder | 1.2wt% | 1.2wt% | 1.2wt% | 1.2wt% | 1.2wt% | 1.2wt% | 1.2wt% |
| | CMC | 0.4wt% | 0.4wt% | 0.6wt% | 0.8wt% | - | 0.4wt% | 0.4wt% |
| | Konjac mannan | - | 0.1wt% | - | - | - | - | - |
| | Guar gum | 0.1wt% | - | 0.2wt% | - | - | - | - |
| | Xanthan gum | - | - | - | - | 0.8wt% | 0.1wt% | - |
| | Glucose (starch) | - | - | - | - | - | - | 0.1wt% |
| Solid content percentage of slurry | | 62wt% | 62wt% | 58wt% | | 62wt% | 62wt% | 62wt% |
| Viscosity (mPas) | | 6500 | 11600 | 11000 | 3000 | 25000 | (Unacquired) | Not dissolved |
| Spinnability | | Yes | Yes | Yes | No | No | (Unacquired) | (Unacquired) |

### Viscosity measurement

The viscosity of each of the positive electrode active material slurries of Working Examples 1 to 3 and Comparative Examples 1 and 2 was measured using a B-type viscometer (TV-22 manufactured by Toki Sangyo Co., Ltd.) (spindle rotor: H, No. 4, rotation speed: 10 rpm). Measurement results are shown in Table 1. It was found that the positive electrode active material slurries of Working Examples 1 to 3 had a viscosity of 4000 mPa·s or more and 15000 mPa·s or less, and had a viscosity suitable for coating.

### Evaluation of spinnability

The spinnability of each of the positive electrode active material slurries of Working Examples 1 to 3 and Comparative Examples 1 and 2 was evaluated. Specifically, a 100 ml beaker containing the positive electrode active material slurry was tilted so that the positive electrode active material slurry dripped from the pouring port (flow rate: about 0.5 ml/sec), and whether or not stringing occurred was observed. Further, a medicine spoon was put into a 100 ml beaker containing the positive electrode active material slurry, and when the medicine spoon was lifted, whether or not stringing occurred in the positive electrode active material slurry attached to the medicine spoon was observed.

Evaluation results are shown in Table 1. Stringing was observed in the positive electrode active material slurries of Working Examples 1 to 3, but stringing was not observed in the positive electrode active material slurries of Comparative Examples 1 and 2.

### Production of lithium ion secondary battery

Lithium ion secondary batteries were produced using each of the positive electrode active material slurries of Working Examples 1 and 2. Specifically, the positive electrode active material slurry was applied onto an aluminum foil (positive electrode current collecting sheet), and the applied film was dried and further pressed to form a positive electrode active material layer (length: 142 mm, width: 84.5 mm) having a thickness of 221 µm on one surface of the positive electrode current collecting sheet, thereby fabricating a positive electrode. No cracking occurred in the positive electrode active material layer.

94 wt% (solid content percentage) of graphite powder, 5 wt% (solid content percentage) of SBR binder, and 1 wt% (solid content percentage) of sodium carboxymethylcellulose were mixed together. Water was added to the mixture and kneaded to prepare a negative electrode active material slurry. The negative electrode active material slurry was applied onto a copper foil (negative electrode current collecting sheet), and the applied film was dried and further pressed to form a negative electrode active material layer (length: 145 mm, width: 86.8 mm) having a thickness of 82.5 µm on one surface of the negative electrode current collecting sheet, thereby fabricating a negative electrode.

Next, the fabricated positive electrode, a separator (three layer separator manufactured by Toray Industries, Inc.), the fabricated negative electrode, and a non-aqueous electrolyte (1.2 M of LiPF₆ electrolyte solution (carbonate-based electrolyte solution)) were placed in a battery case to produce the lithium ion secondary batteries of Working Examples 1 and 2.

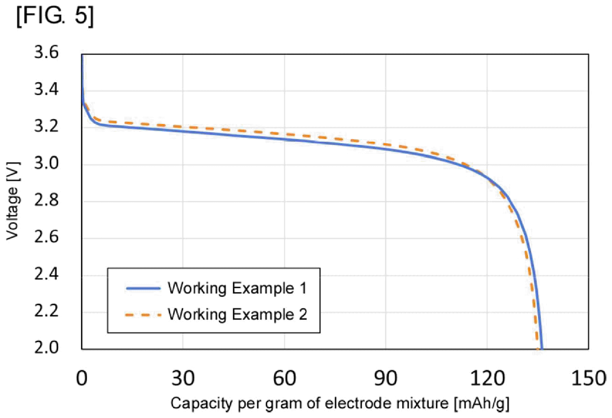

Discharge curves of the lithium ion secondary batteries of Working Examples 1 and 2 are shown in FIG. 5. The lithium ion secondary batteries of Working Examples 1 and 2 were found to have excellent discharge characteristics.

### DESCRIPTION OF REFERENCE SIGNS

2: Positive electrode active material layer
3: Positive electrode current collector
5: Positive electrode
11: Battery case
12: Lid member
13: Positive electrode connection member
14: Negative electrode connection member
15: Non-aqueous electrolyte
18a, 18b: External connection terminal
22: Electrode assembly
25: Shrink film
30: Lithium ion secondary battery
32: Negative electrode
34: Separator
36: Negative electrode active material layer
38: Negative electrode current collector

## Claims

1. A positive electrode for a lithium ion secondary battery, comprising a current collector and a positive electrode active material layer provided on the current collector,
wherein the positive electrode active material layer contains positive electrode active material particles, a latex-derived polymer binder, sodium carboxymethyl cellulose or calcium carboxymethyl cellulose, and a mannose-based water-soluble polymer.

2. The positive electrode according to claim 1, wherein the mannose-based water-soluble polymer is guar gum or glucomannan.

3. The positive electrode according to claim 1, wherein a ratio (b/a) of a mass (b) of the mannose-based water-soluble polymer contained in the positive electrode active material layer to a mass (a) of the positive electrode active material particles contained in the positive electrode active material layer is (0.05/98.3) or more and (0.25/98) or less.

4. The positive electrode according to claim 1, wherein a ratio ((b + c)/a) of a total mass of a mass (b) of the mannose-based water-soluble polymer contained in the positive electrode active material layer and a mass (c) of the sodium carboxymethyl cellulose or the calcium carboxymethyl cellulose contained in the positive electrode active material layer to a mass (a) of the positive electrode active material particles contained in the positive electrode active material layer is (0.45/98.3) or more and (0.85/98) or less.

5. The positive electrode according to claim 1, wherein the positive electrode active material layer has a thickness of 150 µm or more and 400 µm or less.

6. A lithium ion secondary battery comprising the positive electrode according to any one of claims 1 to 5, a negative electrode, a separator, and a non-aqueous electrolyte.

7. A positive electrode active material slurry containing positive electrode active material particles, a latex-derived polymer binder, sodium carboxymethylcellulose or calcium carboxymethylcellulose, a mannose-based water-soluble polymer, and water.

8. The positive electrode active material slurry according to claim 7 having a viscosity of 4000 mPa·s or more and 15000 mPa·s or less.
